# EUROPEAN PATENT APPLICATION

(11) **EP 3 460 277 A1**
(43) Date of publication of application: **27.03.2019**
(21) Application number: 18196892.6
(22) Date of filing: 26.09.2018
(51) Int. Cl.: F16D 1/10, B22F 3/24, B22F 5/08, B22F 5/10

(54) **SELF LUBRICATING METALLIC SPLINED COUPLING FOR HIGH SPEED AEROSPACE PUMPS**

(30) Priority: 26.09.2017 US 201715716186
(71) Applicant: Hamilton Sundstrand Corporation, Charlotte, NC 28217-4578 (US)
(72) Inventor: SLAYTER, Matthew Allen, Rockford, IL Illinois 61114 (US); PUGLIESE, Jordan Christopher, Woodstock IL 60098 (US)
(74) Representative: Dehns

(57) **Abstract**

A method (500) of manufacturing a splined coupler (300) is provided. The method (500) comprising: sintering powdered metal to form a splined coupler (300); quenching (506) the splined coupler (300); applying a vacuum pressure (508) across the splined coupler (300); and migrating oil (510) into the splined coupler (300) using the vacuum pressure.

## Description

### BACKGROUND

The subject matter disclosed herein generally relates fuel systems, and more specifically to an apparatus and a method for connecting fuel pumps to gear boxes.

Fuel to power the engines are often provided by fuel pumps driven by gear boxes operably connected to the gas turbine engine. Excessive heat and lack of lubrication often leads to increased wear of the connections between the gear box and the fuel pump.

### BRIEF SUMMARY

According to one embodiment, a method of manufacturing a splined coupler is provided. The method comprising: sintering powdered metal to form a splined coupler; quenching the splined coupler; applying a vacuum pressure across the splined coupler; and migrating oil into the splined coupler using the vacuum pressure.

In addition to one or more of the features described above, or as an alternative, further embodiments may include migrating oil into the splined coupler during the quenching.

In addition to one or more of the features described above, or as an alternative, further embodiments may include heating the splined coupler while applying the vacuum pressure across the splined coupler.

In addition to one or more of the features described above, or as an alternative, further embodiments may include that the splined coupler comprises: a body having a radially inward surface and a radially outward surface opposite the radially inward surface.

In addition to one or more of the features described above, or as an alternative, further embodiments may include that the radially inward surface includes a plurality of inner spline teeth and the radially outward surface includes a plurality of outer spline teeth.

In addition to one or more of the features described above, or as an alternative, further embodiments may include: machining a plurality of inner spline teeth in the radially inward surface.

In addition to one or more of the features described above, or as an alternative, further embodiments may include: machining a plurality of outer spline teeth in the radially outward surface.

In addition to one or more of the features described above, or as an alternative, further embodiments may include that the oil is a mineral oil.

According to another embodiment, a splined coupler is provided. The splined coupler comprising a body having a radially inward surface and a radially outward surface opposite the radially inward surface; a plurality of inner spline teeth located on the radially inward surface; and a plurality of outer spline teeth located on the radially outward surface; wherein the splined coupler is composed of a powdered metal.

In addition to one or more of the features described above, or as an alternative, further embodiments may include that the powdered metal is impregnated by an oil.

In addition to one or more of the features described above, or as an alternative, further embodiments may include that the oil is a mineral oil.

In addition to one or more of the features described above, or as an alternative, further embodiments may include that the body is tubular in shape.

According to another embodiment, a connector assembly to operably connect an engine gear box and a fuel pump is provided. The connector assembly comprising: a first splined coupler composed of a powdered metal; a second splined coupler composed of the powdered metal; and a spline connector operably connected to the engine gear box through the first splined coupler and operably connected to the fuel pump through the second splined coupler, wherein each of the first splined coupler and the second splined coupler are composed of a powdered metal.

In addition to one or more of the features described above, or as an alternative, further embodiments may include that the first splined coupler further comprises inner spline teeth, wherein the inner spline teeth of the first splined coupler mesh with outer spline teeth of the spline connector.

In addition to one or more of the features described above, or as an alternative, further embodiments may include that the second splined coupler further comprises outer spline teeth, wherein the outer spline teeth of the second splined coupler mesh with inner spline teeth of the spline connector.

In addition to one or more of the features described above, or as an alternative, further embodiments may include that the second splined coupler further comprises outer spline teeth, wherein the outer spline teeth of the second splined coupler mesh with inner spline teeth of the spline connector.

In addition to one or more of the features described above, or as an alternative, further embodiments may include that the outer spline teeth of the spline connector are located at a first end of the spline connector and the inner spline teeth of the spline connector are located at a second end of the spline connector, the second end being opposite the first end.

In addition to one or more of the features described above, or as an alternative, further embodiments may include that the powdered metal is impregnated by an oil.

In addition to one or more of the features described above, or as an alternative, further embodiments may include that the oil is a mineral oil

Technical effects of embodiments of the present disclosure include utilizing splined couplers composed of an oiled impregnated powdered metal to operably connect a fuel pump and engine gear box.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION

The following descriptions should not be considered limiting in any way. With reference to the accompanying drawings, like elements are numbered alike:
FIG. 1 is a block diagram of an engine and associated fuel system, according to an embodiment of the present disclosure;
FIG. 2 is a schematic illustration of an engine gear box and a fuel pump, according to an embodiment of the present disclosure;
FIG. 3 is an isometric view of a splined coupler, according to an embodiment of the present disclosure; and
FIG. 4 is a flow process illustrating a method of manufacturing the splined coupler of FIG. 3, according to an embodiment of the present disclosure.

### DETAILED DESCRIPTION

A detailed description of one or more embodiments of the disclosed apparatus and method are presented herein by way of exemplification and not limitation with reference to the Figures.

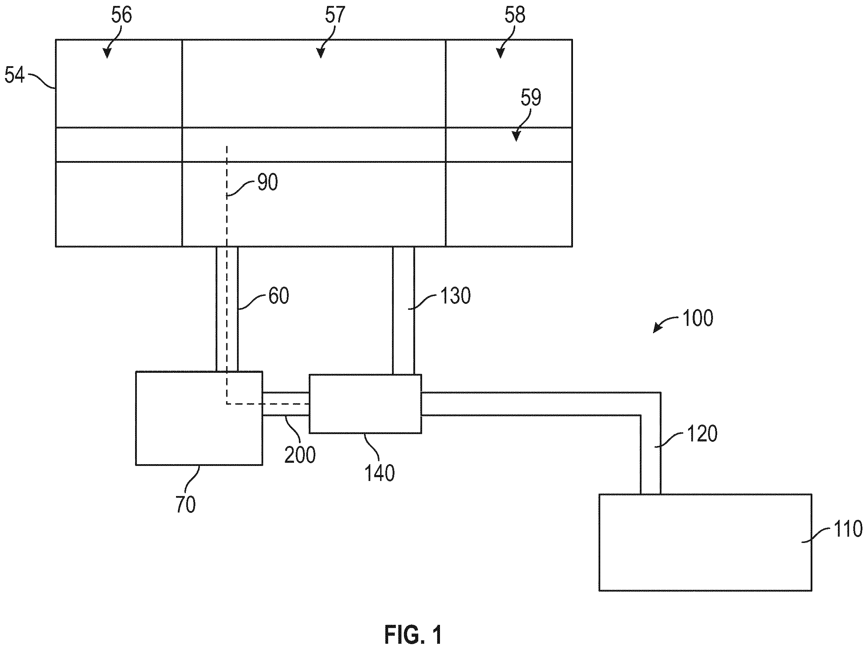

Referring now to FIG. 1, which shows a block diagram of an engine 54 and associated fuel system 100, according to an embodiment of the present disclosure. The engine 54 may be a gas turbine engine that may be used on an aircraft. The fuel system 100 is configured to deliver fuel to the engine 54. At a high level, the fuel system 100 includes a fuel tank 110, a first fuel line 120, a second fuel line 130, and a fuel pump 140. The fuel tank 110 is fluidly connected to the fuel pump 140 through the first fuel line 120. The fuel pump 140 is fluidly connected to the engine 54 through the second fuel line 130. It is understood that the fuel system 100 may include more or less fuel lines 120, 130 and the fluid connections between the fuel tank 110, the fuel pump 140, and the engine 54 may vary from the exemplary fluid connections described above. It is also understood that for simplicity additional components of the fuel system 100 have been left out of FIG. 1, such as, for example, fuel valves and sensors. The fuel pump 140 is operably connected to the engine 54 through an accessory gear box 70, a connector assembly 200, and a drive shaft 60, as shown in FIG. 1. The fuel pump 140 is operably connected to the gear box 70 through the connector assembly 200 and the gear box 70 is operably connected to the engine 54 through the drive shaft 60. The engine 54 may include a compressor 56, a turbine 58, and a combustion chamber. The main shaft 59 operably connects the compressor 56 to the turbine 58. Drive line 90 illustrates that rotational torque is transferred from the main shaft 59 of the engine 54 through the driveshaft 60, through the gear box 70, through the connector assembly 200, and to the fuel pump 140.

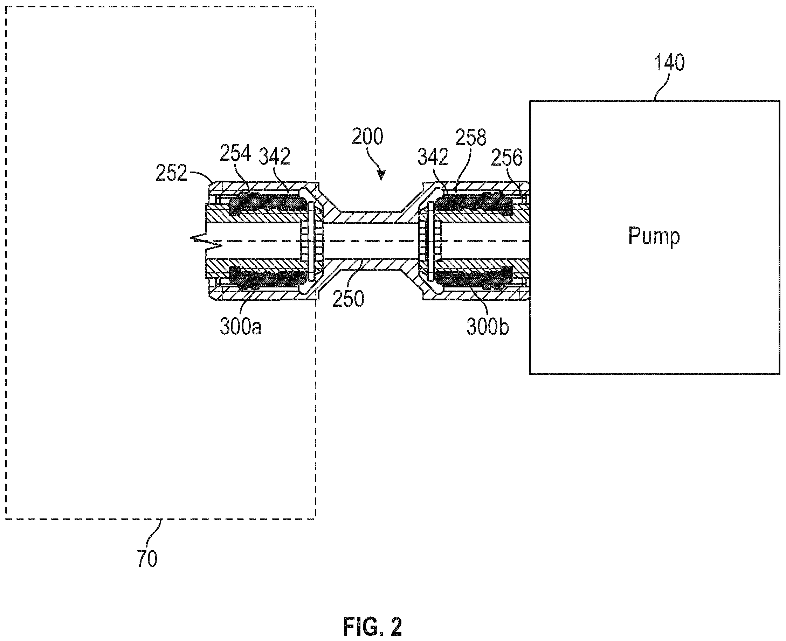

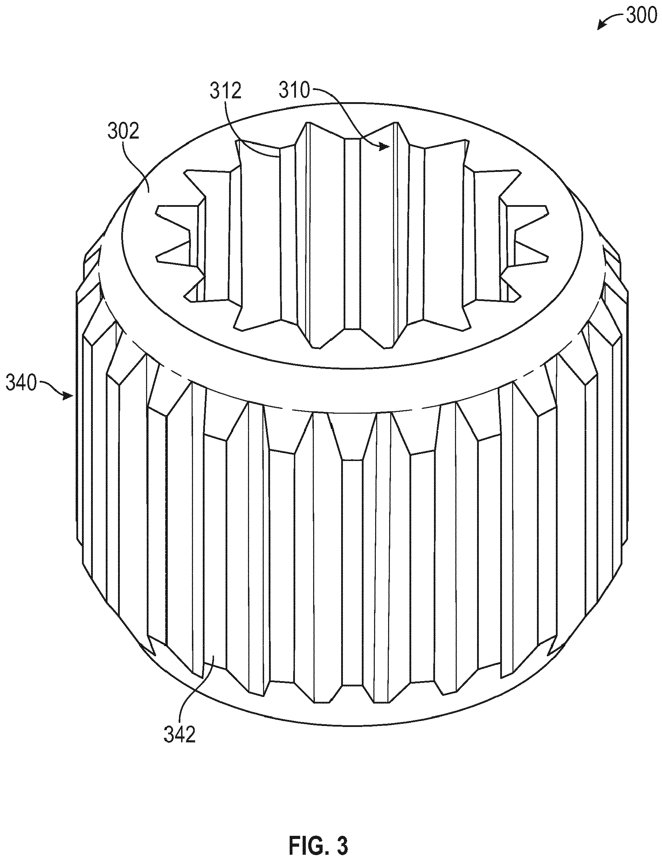

Referring now to FIG. 2 with continued reference to FIG. 1. FIG. 2 shows the connector assembly 200 operably connecting the gear box 70 and the fuel pump 140. The connector assembly 200 is configured to transfer torque from the gear box 70 to the fuel pump 140. The torque allows the fuel pump 140 to pump fuel from the fuel tank 110 to the engine 54. The connector assembly 200 includes a first splined coupler 300a, a second splined coupler 300b, and a spline connector 250. The spline connector 250 is operably connected to the gear box 70 by the first splined coupler 300a. Outer spline teeth 342 on the first splined coupler 300a mesh with inner spline teeth 254 at a first end 252 of the spline connector 250. It is understood that opposite meshing connections between the spline connector 250 and the first splined connector 250 may be utilized. For example, inner spline teeth 312 (see FIG. 3) of the first splined coupler 300a may mesh with outer spline teeth (not shown) at the first end 252 of the spline connector 250. The spline connector 350 is operably connected to the fuel pump 140 by the second splined coupler 300a. Outer spline teeth 342 on the second splined coupler 300b mesh with inner spline teeth 258 at a second end 256 of the spline connector 250. The second end 256 is opposite the first end 252 as seen 252 in FIG. 2.

Referring now to FIG. 3 with continued reference to FIGs. 1 and 2. FIG. 3 shows a splined coupler 300 that may be the first splined coupler 300a or the second splined coupler 300b seen in FIG. 2. The splined coupler 300 includes a body 302 having a radially inward surface 310 and a radially outward surface 340 opposite the radially inward surface 310. The body 302 may be tubular in shape as seen in FIG. 3. The radially inward surface 310 may include a plurality of inner spline teeth 312. The radially outward surface 340 may include a plurality of outer spline teeth 342. In an embodiment, the splined coupler 300 is composed of an oil impregnated powdered metal including but not limited to SAE 863 iron/copper alloy, powdered 4340 steel, and powdered 8620 steel. Utilizing an oil impregnated powdered metal offers several advantageous over previous polymer designs including but not limited to increased part strength, increased hardness, self-lubricating capability, greater mechanical and geometric thermal stability, and lower chemical susceptibility. Advantageously, as the temperature of the splined coupler 300 increases the pores of the powdered metal may open and impregnated oil may leak out, thus allowing for self-lubrication. The oil impregnated powdered metal may be impregnated with a variety of oils including but not limited to MIL-PRF-7808 and MIL-PRF-23699. In an embodiment, the oil is a mineral oil.

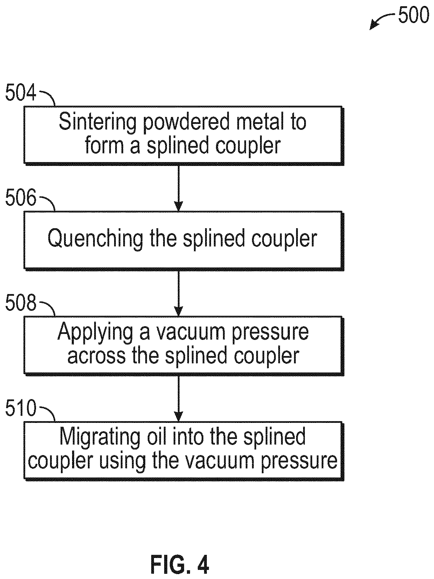

Referring now to FIG. 4 with continued reference FIGs. 1-3. FIG. 4 shows a flow process illustrating a method 500 of manufacturing the splined coupler 300 of FIG. 3, according to an embodiment of the present disclosure. At block 504, powdered metal is sintered to form a splined coupler 300. Sintering may include applying heat and pressure to the powdered metal to form the splined coupler 300. As described above the splined coupler 300 comprises a body 302 having a radially inward surface 310 and a radially outward surface 340 opposite the radially inward surface 310. The radially inward surface 310 includes a plurality of inner spline teeth 312 and the radially outward surface 340 includes a plurality of outer spline teeth 342. The inner spline teeth 312 and the outer spline teeth 342 may be formed during the sintering of block 504 or may formed using a another method, such as, for example, machining.

At block 506, the splined coupler 300 is quenched in a fluid such as, for example water. Oil may be added to the fluid to begin the process of migrating oil into the splined coupler 300, which is covered further at block 510. At block 508, a vacuum pressure is applied across the splined coupler 300 and at block 510 oil is migrated into the splined coupler 300 using the vacuum pressure. In one non-limiting example, in order to apply a vacuum pressure, the splined coupler 300 may be placed in a sealed container and air may be removed from the container 300. Oil may be placed in the seal container such that as the air is removed the oil will migrate into the splined coupler 300. Heat may be applied to the splined coupler 300 while applying the vacuum pressure across the splined coupler 300. Advantageously, heat may open up the pores of the powdered metal of the splined coupler 300 and allow the oil greater access to migrate into the powdered metal.

While the above description has described the flow process of FIG. 4 in a particular order, it should be appreciated that unless otherwise specifically required in the attached claims that the ordering of the steps may be varied.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A method (500) of manufacturing a splined coupler (300), the method comprising:
sintering powdered metal (504) to form a splined coupler (300);
quenching (506) the splined coupler (300);
applying a vacuum pressure (508) across the splined coupler; and
migrating oil (510) into the splined coupler (300) using the vacuum pressure.

2. The method of claim 1, further comprising:
migrating oil into the splined coupler (300) during the quenching.

3. The method of any preceding claim, further comprising:
heating the splined coupler while applying the vacuum pressure across the splined coupler.

4. The method of any preceding claim, wherein:
the splined coupler (300) comprises: a body (302) having a radially inward surface (310) and a radially outward surface (340) opposite the radially inward surface (310).

5. The method of claim 4, wherein:
the radially inward surface (310) includes a plurality of inner spline teeth (312) and the radially outward surface (340) includes a plurality of outer spline teeth (342).

6. The method of claim 4, further comprising:
machining a plurality of inner spline teeth (312) in the radially inward surface (310).

7. The method of claim 4, further comprising:
machining a plurality of outer spline teeth (342) in the radially outward surface (340).

8. The method of claim 4, wherein:
the oil is a mineral oil.

9. A splined coupler (300) comprising:
a body (302) having a radially inward surface (310) and a radially outward surface (340) opposite the radially inward surface (310);
a plurality of inner spline teeth (312) located on the radially inward surface (310); and
a plurality of outer spline teeth (342) located on the radially outward surface (340);
wherein the splined coupler (300) is composed of a powdered metal.

10. The splined coupler (300) of claim 9, wherein:
the powdered metal is impregnated by an oil.

11. The splined coupler (300) of claim 10, wherein:
the oil is a mineral oil.

12. The splined coupler of any of claims 9 to 11, wherein:
the body (302) is tubular in shape.
